# EUROPÄISCHE PATENTSCHRIFT

(11) **EP 2 796 954 B1**
(45) Veröffentlichungstag und Bekanntmachung des Hinweises auf die Patenterteilung: **25.11.2015**
(21) Anmeldenummer: 13164874.3
(22) Anmeldetag: 23.04.2013
(51) Int. Cl.: G05B 19/4093

(54) **Numerische Steuerung mit Benachrichtigung eines CAM-Systems bei Änderung des Teileprogramms**
Numerical controller with notification of a CAM system when the part program is changed
Commande numérique avec information d'un système CAM lors du changement du programme de pièces

(43) Veröffentlichungstag der Anmeldung: 29.10.2014
(73) Patentinhaber: Siemens Aktiengesellschaft, 80333 München (DE)
(72) Erfinder: Sinn, Christof, 75417 Mühlacker (DE); Spielmann, Ralf, 70569 Stuttgart (DE)

(56) Entgegenhaltungen:
- EP-A1- 0 881 034
- EP-A1- 1 296 211
- EP-A1- 2 541 355
- US-A1- 2003 023 341
- US-A1- 2004 143 362

## Beschreibung

Die vorliegende Erfindung betrifft ein Betriebsverfahren für eine numerische Steuerung,
- wobei die numerische Steuerung Zugriff auf ein Teileprogramm hat, das von der numerischen Steuerung ausführbar ist,
- wobei von der numerischen Steuerung durch Ausführen des Teileprogramms eine Produktionsmaschine steuerbar ist,
- wobei der numerischen Steuerung von einem Bediener über eine Bedienerschnittstelle ein Auswahlbefehl vorgegeben wird, mittels dessen mindestens eine Programmanweisung des Teileprogramms selektiert wird,
- wobei die numerische Steuerung eine parametrisierte Beschreibung der mindestens einen selektierten Programmanweisung oder einer die mindestens eine selektierte Programmanweisung enthaltenden Sequenz von Programmanweisungen über die Bedienerschnittstelle an den Bediener der numerischen Steuerung ausgibt,
- wobei die numerische Steuerung vom Bediener eine Änderung der parametrisierten Beschreibung entgegennimmt,
- wobei die numerische Steuerung ein mit der geänderten parametrisierten Beschreibung korrespondierendes modifiziertes Teileprogramm speichert.

Die vorliegende Erfindung betrifft weiterhin ein Computerprogramm, wobei das Computerprogramm Maschinencode umfasst, der von einer numerischen Steuerung unmittelbar ausführbar ist, wobei die Ausführung des Maschinencodes durch die numerische Steuerung bewirkt, dass die numerische Steuerung ein derartiges Betriebsverfahren ausführt.

Die vorliegende Erfindung betrifft weiterhin eine numerische Steuerung, in der ein von der numerischen Steuerung ausführbares derartiges Computerprogramm gespeichert ist. Numerische Steuerungen arbeiten im laufenden Betrieb üblicherweise ein sogenanntes Teileprogramm ab. Das Teileprogramm legt fest, auf welche Weise lage- und drehzahlgeregelte Achsen der Produktionsmaschine (insbesondere einer Werkzeugmaschine) gesteuert werden. Theoretisch ist es möglich, das Teileprogramm direkt über die Bedienerschnittstelle der numerischen Steuerung zu generieren. Über die Bedienerschnittstelle der numerischen Steuerung steht jedoch nur die Möglichkeit zur Verfügung, einzelne Steuerbefehle sequentiell nacheinander abzusetzen. In der Praxis wird das Teileprogramm daher, ausgehend von mittels eines CAD-Systems generierten Daten, mittels eines CAM-Systems generiert. Das CAM-System kann einen sogenannten Postprozessor mit umfassen.

Beim Generieren des Teileprogramms wird mittels des CAM-Sys¬tems von einem Bediener des CAM-Systems eine Folge von Sequenzen von Programmanweisungen generiert. Für jede Sequenz von Programmanweisungen gibt der Bediener des CAM-Systems dem CAM-System eine parametrisierte Beschreibung der jeweiligen Bearbeitung vor. Beispielsweise kann beim Fräsen im Formenbau der Bediener des CAM-Systems für eine Schlichtoperation vorgegeben, welches Werkzeug verwendet werden soll, wie groß eine Zustelltiefe sein soll, was der Geometriebezug ist und dergleichen mehr. Auch kann er eine Bahn, entlang derer beispielsweise ein Fräser bewegt werden soll, vorgegeben. Anhand der parametrisierten Beschreibungen der Sequenzen von Programmanweisungen generiert das CAM-System sodann das Teileprogramm. Das Teileprogramm wird an die numerische Steuerung übertragen. Es enthält in der Regel nicht mehr die parametrisierten Beschreibungen als solche, sondern nur noch die Abfolge der einzelnen Steuerbefehle für die lage- und drehzahlgeregelten Achsen der Produktionsmaschine. Die Abfolge der einzelnen Steuerbefehle kann sehr lang sein (teilweise mehrere Millionen von Datensätzen). Die Kriterien, welche der Ermittlung der Abfolge der Steuerbefehle zu Grunde lagen, können der Abfolge der Steuerbefehle nicht mehr entnommen werden. Beispiele derartiger Kriterien sind der Zeilenabstand, die Werkzeuggeometrie, die Bearbeitungsstrategie, Auswirkungen von Kollisionsvermeidungsrechnungen, technologische Werte wie beispielsweise die Anstellung des Werkzeuges usw.

Der Bediener des CAM-Systems ist in der Regel eine vom Bediener der numerischen Steuerung verschiedene Person. In manchen Fällen fehlen dem Bediener des CAM-Systems technische Kenndaten der Produktionsmaschine, die mittels des Teileprogramms gesteuert werden soll. Dies kann zur Folge haben, dass die Ausführung des Teileprogramms durch die numerische Steuerung zu nicht ordnungsgemäß hergestellten Werkstücken führt. Je nach Lage des Einzelfalls kann es in derartigen Fällen erforderlich sein, erneut grundlegend neu das Teileprogramm zu ermitteln. In vielen Fällen ist für den Bediener der numerischen Steuerung jedoch aufgrund seiner Kenntnis der Produktionsmaschine und deren technischer Kenndaten ersichtlich, welcher Parameter welcher parametrisierten Beschreibung geändert werden muss, um ein ordnungsgemäßes Werkstück herstellen zu können.

Im konventionellen Stand der Technik kann der Bediener der numerischen Steuerung Änderungen des Teileprogramms nur dann durchführen, wenn der zu ändernde Teil des Teileprogramms in der numerischen Steuerung in parametrisierter Form vorliegt. Dies ist in der Regel nur bei einem geringen Bruchteil des gesamten Teileprogramms der Fall. In allen anderen Fällen muss sich der Bediener der numerischen Steuerung im konventionellen Stand der Technik mit dem Bediener des CAM-Systems in Verbindung setzen und diesem mitteilen, welche Parameter in welcher parametrisierten Beschreibung er geändert haben möchte. Der Bediener des CAM-Systems ruft daraufhin das CAM-Sys¬tem auf, ändert manuell die entsprechende parametrisierte Beschreibung und erstellt sodann das Teileprogramm neu. Das entsprechend modifizierte Teileprogramm wird an die numerische Steuerung übertragen. Neuerdings sind auch Bestrebungen im Gange, dem Bediener der numerischen Steuerung Möglichkeiten zur Verfügung zu stellen, mittels derer er auch diejenigen Teile des Teileprogramms ändern kann, die in der numerischen Steuerung nicht a priori in parametrisierter Form vorliegen.

Wenn der Bediener der numerischen Steuerung das Teileprogramm ändert, führt dies - logischerweise - zu einer Inkonsistenz zwischen dem vom Bediener des CAM-Systems erstellten Teileprogramm und dem von der numerischen Steuerung abgearbeiteten modifizierten Teileprogramm. Um wieder eine Konsistenz herbeizuführen, muss im Stand der Technik der Bediener des CAM-Systems dieselben Änderungen durchführen, die der Bediener der numerischen Steuerung durchgeführt hat. Ein derartiges Nachführen von Änderungen ist fehlerträchtig, umständlich und zeitintensiv.

Aus der US 2003/0 023 341 A1 ist ein Betriebsverfahren für eine numerische Steuerung bekannt, wobei die numerische Steuerung Zugriff auf ein Teileprogramm hat, das von der numerischen Steuerung ausführbar ist, wobei von der numerischen Steuerung durch Ausführen des Teileprogramms eine Produktionsmaschine steuerbar ist. Einer Programmerstelleinrichtung kann von einem Bediener über eine Bedienerschnittstelle ein Auswahlbefehl vorgegeben werden, mittels dessen mindestens eine Programmanweisung des Teileprogramms selektiert wird. Die Programmerstelleinrichtung gibt eine parametrisierte Beschreibung der selektierten Programmanweisung oder einer die selektierte Programmanweisung enthaltenden Sequenz von Programmanweisungen über die Bedienerschnittstelle an den Bediener aus. Sie nimmt vom Bediener eine Änderung der parametrisierten Beschreibung entgegen und speichert ein mit der geänderten parametrisierten Beschreibung korrespondierendes modifiziertes Teileprogramm ab. Weiterhin hinterlegt die Programmerstelleinrichtung in einer Parametertabelle entsprechende Änderungen von Parametern. Die Hinterlegung dient der Erstellung einer Wissensbasis. Aus der US 2003/0 023 341 A1 geht nicht eindeutig hervor, ob die Programmerstelleinrichtung Bestandteil der numerischen Steuerung ist oder nicht.

Aus der EP 2 541 355 A1 ist ein Betriebsverfahren für eine numerische Steuerung bekannt, wobei die numerische Steuerung Zugriff auf ein Teileprogramm hat, das von der numerischen Steuerung ausführbar ist, wobei von der numerischen Steuerung durch Ausführen des Teileprogramms eine Produktionsmaschine steuerbar ist. Aus der EP 2 541 355 A1 ist weiterhin bekannt, dass einer Programmerstelleinrichtung von einem Bediener über eine Bedienerschnittstelle ein Auswahlbefehl vorgegeben wird, mittels dessen mindestens eine Programmanweisung des Teileprogramms selektiert wird. Die Programmerstelleinrichtung gibt eine parametrisierte Beschreibung der selektierten Programmanweisung oder einer die selektierte Programmanweisung enthaltenden Sequenz von Programmanweisungen über die Bedienerschnittstelle an den Bediener aus. Sie nimmt vom Bediener eine Änderung der parametrisierten Beschreibung entgegen und speichert ein mit der geänderten parametrisierten Beschreibung korrespondierendes modifiziertes Teileprogramm ab. Die Programmerstelleinrichtung ist allem Anschein nach nicht Bestandteil der numerischen Steuerung.

Aus der US 2004/0 143 362 A1 ist ein Betriebsverfahren für eine numerische Steuerung bekannt, wobei die numerische Steuerung Zugriff auf ein Teileprogramm hat, das von der numerischen Steuerung ausführbar ist, wobei von der numerischen Steuerung durch Ausführen des Teileprogramms eine Produktionsmaschine steuerbar ist. Der numerischen Steuerung kann von einem Bediener über eine Bedienerschnittstelle ein Auswahlbefehl vorgegeben werden, mittels dessen mindestens eine Programmanweisung des Teileprogramms selektiert wird. Die numerische Steuerung gibt eine parametrisierte Beschreibung der selektierten Programmanweisung oder einer die selektierte Programmanweisung enthaltenden Sequenz von Programmanweisungen über die Bedienerschnittstelle an den Bediener aus. Sie nimmt vom Bediener eine Änderung der parametrisierten Beschreibung entgegen und speichert ein mit der geänderten parametrisierten Beschreibung korrespondierendes modifiziertes Teileprogramm ab. Die Speicherung erfolgt in einer Datenbank, auf die sowohl von der numerischen Steuerung aus als auch von einem CAM-System aus zugegriffen werden kann.

Aus der EP 1 296 211 A1 ist ein Betriebsverfahren für eine numerische Steuerung bekannt, wobei die numerische Steuerung Zugriff auf ein Teileprogramm hat, das von der numerischen Steuerung ausführbar ist, wobei von der numerischen Steuerung durch Ausführen des Teileprogramms eine Produktionsmaschine steuerbar ist. Bei der EP 1 296 211 A1 werden am Teileprogramm vorgenommene Änderungen zum Aufbau einer Wissensbasis in einer Datenbank hinterlegt. Ob die Änderungen manuell oder automatisch vorgenommen werden, geht aus der EP 1 296 211 A1 nicht eindeutig hervor.

Aus der EP 0 881 034 A1 ist ein Betriebsverfahren für eine numerische Steuerung bekannt, wobei die numerische Steuerung Zugriff auf ein Teileprogramm hat, das von der numerischen Steuerung ausführbar ist, wobei von der numerischen Steuerung durch Ausführen des Teileprogramms eine Produktionsmaschine steuerbar ist. Außerhalb der numerischen Steuerung erfolgt eine Analyse des Teileprogramms. Die Ergebnisse der Analyse werden in eine zentrale Datenbank auf Seiten des CAM-Systems eingeschrieben.

Die Aufgabe der vorliegenden Erfindung besteht darin, Möglichkeiten zu schaffen, mittels derer das im CAM-System hinterlegte Teileprogramm auf einfache Weise konsistent zu dem von der numerischen Steuerung abgearbeiteten Teileprogramm gehalten werden kann.

Die Aufgabe wird durch ein Betriebsverfahren mit den Merkmalen des Anspruchs 1 gelöst. Vorteilhafte Ausgestaltungen des erfindungsgemäßen Betriebsverfahrens sind Gegenstand der abhängigen Ansprüche 2 bis 7.

Erfindungsgemäß wird ein Betriebsverfahren der eingangs genannten Art dadurch ausgestaltet, dass die numerische Steuerung zusammen mit dem Speichern des modifizierten Teileprogramms zwangsweise eine Nachricht an eine vorbestimmte Adresse sendet, welche in automatisiert auswertbarer Form zumindest das ursprüngliche Teileprogramm und die vorgenommene Änderung identifiziert, so dass das CAM-System, mittels dessen das Teileprogramm generiert wurde, in der Lage ist, anhand der Nachricht selbsttätig und automatisch einen dem ursprünglichen Teileprogramm zugrundeliegenden Datensatz zu ermitteln und den Datensatz entsprechend der vorgenommenen Änderung zu modifizieren. Der Begriff "zwangsweise" impliziert, dass das Senden der Nachricht vom Bediener der numerischen Steuerung nicht unterdrückt werden kann.

Es ist zwar nicht erforderlich und oftmals sogar nicht wünschenswert, dass das CAM-System das Nachführen seines Teileprogramms völlig selbsttätig und automatisch vornimmt. Vorzuziehen ist in der Regel vielmehr eine halbautomatische Vorgehensweise, bei welcher dem CAM-System von seinem Bediener die entsprechenden Nachrichten vorgegeben werden, welche das CAM-System einer Aktualisierung des im CAM-System vorhandenen Teileprogramms tatsächlich zu Grunde legt. Vorzugsweise entscheidet also der Bediener des CAM-Systems, welche Nachrichten der Aktualisierung zu Grunde gelegt werden. Die Nachricht muss jedoch derart ausgestaltet sein, dass ein selbsttätiges und automatisches Nachführen möglich ist.

Vorzugsweise sendet die numerische Steuerung die Nachricht unabhängig davon, welche Änderung der Bediener vorgenommen hat, an die vorbestimmte Adresse.

Die vorbestimmte Adresse, an welche die Nachricht gesendet wird, kann nach Bedarf bestimmt sein. Vorzugsweise ist die Adresse für das CAM-System charakteristisch, mittels dessen das Teileprogramm erstellt wurde.

Vorzugsweise enthält die Nachricht zusätzlich zu den Angaben über das Teileprogramm und die vorgenommene Änderung in automatisiert auswertbarer Form eine Identifikation der numerischen Steuerung.

Es ist möglich, dass die numerische Steuerung vor dem Senden der Nachricht dem Bediener der numerischen Steuerung die Möglichkeit gibt, der Nachricht Freitext und/oder Dateien beizufügen. Dadurch ist beispielsweise für den Bediener des CAM-Systems oftmals einfacher ersichtlich, warum der Bediener der numerischen Steuerung eine entsprechende Änderung des Teileprogramms vorgenommen hat.

Im übrigen kann die Nachricht nach Bedarf bestimmt sein. Beispielsweise kann die Nachricht eine E-Mail sein.

Für ein ordnungsgemäßes Funktionieren des erfindungsgemäßen Betriebsverfahrens ist es erforderlich, dass der numerischen Steuerung die vorbestimmte Adresse bekannt ist. Es ist möglich, dass die vorbestimmte Adresse in der numerischen Steuerung fest hinterlegt ist. Vorzugsweise ermittelt die numerische Steuerung jedoch die vorbestimmte Adresse selbsttätig anhand eines Headers des Teileprogramms.

Die Aufgabe wird weiterhin durch ein Computerprogramm mit den Merkmalen des Anspruchs 8 gelöst. Erfindungsgemäß wird ein Computerprogramm der eingangs genannten Art dadurch ausgestaltet, dass die Ausführung des Maschinencodes durch die numerische Steuerung bewirkt, dass die numerische Steuerung ein erfindungsgemäßes Betriebsverfahren ausführt.

Die Aufgabe wird weiterhin gemäß Anspruch 9 durch eine numerische Steuerung gelöst, in der ein von der numerischen Steuerung ausführbares erfindungsgemäßes Computerprogramm gespeichert ist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: einen Verbund mehrerer Einrichtungen,
- FIG 2: ein Hauptprogramm eines Teileprogramms,
- FIG 3: ein Unterprogramm eines Teileprogramms,
- FIG 4: eine Kommunikation des Verbundes von FIG 1,
- FIG 5: eine Ausgabemaske und
- FIG 6: eine Nachricht.

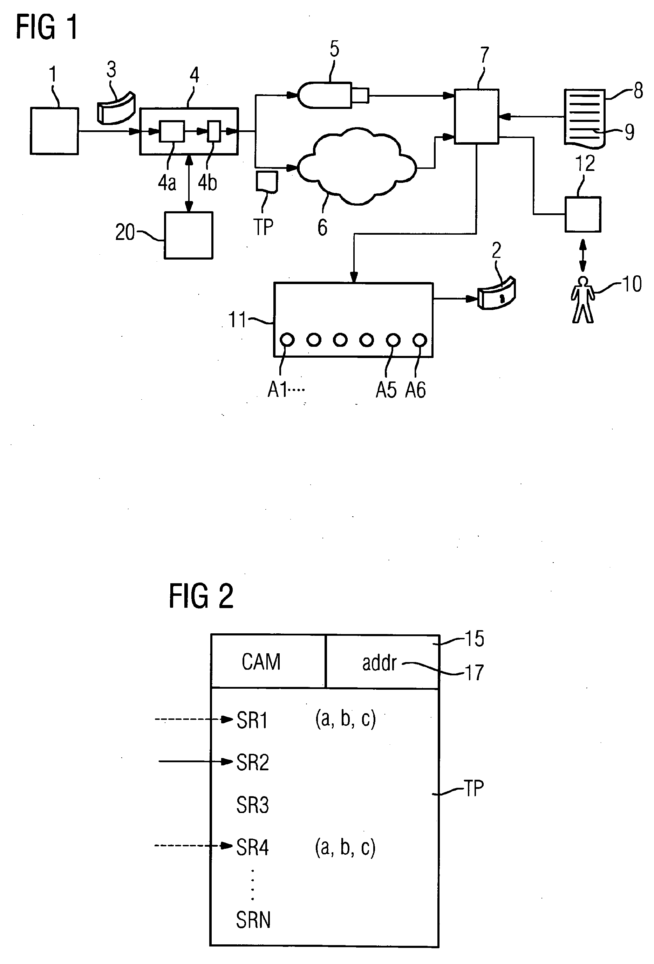

Nachstehend wird in Verbindung mit FIG 1 zunächst die typische Vorgehensweise des Standes der Technik erläutert, auf welcher die vorliegende Erfindung aufbaut.

Gemäß FIG 1 wird zunächst mittels eines CAD-Systems 1 ein herzustellendes Werkstück 2 spezifiziert. Eine (rein geometrische) Beschreibung 3 des Werkstücks 2 wird an ein CAM-Sys¬tem 4 weitergegeben. Das CAM-System 4 umfasst in der Regel einen CAM-Prozessor 4a und einen Postprozessor 4b. Mittels des CAM-Systems 4 wird ein Teileprogramm TP generiert. Der CAM-Prozessor 4a ist für ein Verfahrensmuster zuständig. In der Regel erzeugt der CAM-Prozessor 4a anhand von parametrisierten Masken, die Flächen des Werkstücks 2 zugeordnet werden, eine Abfolge von Werkzeugbahnen. Die Werkzeugbahnen sind in der Regel noch steuerungsneutral definiert. Der Postprozessor 4b setzt die Werkzeugbahnen in eine steuerungsspezifische Folge (= das Teileprogramm TP) um. Das Teileprogramm TP wird - beispielsweise über einen Datenträger 5 oder eine Rechner-Rechner-Verbindung 6 - an eine numerische Steuerung 7 übertragen. Die numerische Steuerung 7 hat dadurch Zugriff auf das Teileprogramm TP. Die Darstellung des Datenträgers 5 als USB-Memorystick ist rein beispielhaft. Die Rechner-Rechner-Verbindung 6 kann - je nach Lage des Einzelfalls - als LAN, als WAN oder als WWW ausgebildet sein.

Die numerische Steuerung 7 ist mit einem Computerprogramm 8 programmiert. Das Computerprogramm 8 ist in der numerischen Steuerung 7 intern gespeichert, beispielsweise in einem EEPROM oder in einem Flash-EPROM. Das Computerprogramm 8 umfasst Maschinencode 9, der von der numerischen Steuerung 7 unmittelbar ausführbar ist. Das Computerprogramm 8 wird in der Regel vom Hersteller der numerischen Steuerung 7 in der numerischen Steuerung 7 hinterlegt.

Die Ausführung des Maschinencodes 9 durch die numerische Steuerung 7 bewirkt zunächst, dass die numerische Steuerung 7 - nach Vorgabe eines entsprechenden Steuerbefehls durch einen Bediener 10 - das Teileprogramm TP ausführt. Durch Ausführen des Teileprogramms TP wird von der numerischen Steuerung 7 eine Produktionsmaschine 11 gesteuert. Die Produktionsmaschine 11 kann insbesondere als Werkzeugmaschine ausgebildet sein, beispielsweise als Werkzeugmaschine mit einer, zwei, drei, vier, fünf, ... lagegeregelten Achsen A1 bis A5. Durch das Ausführen des Teileprogramms TP (und die entsprechende Steuerung der Produktionsmaschine 11) wird das Werkstück 2 hergestellt.

Ein Hauptprogramm des Teileprogramms TP umfasst gemäß FIG 2 in der Regel Unterprogrammaufrufe SR1, SR2, ... SRN. Es kann sogar ausschließlich aus einer Sequenz von Unterprogrammaufrufen SR1, SR2, ... SRN bestehen.

Einige der Unterprogrammaufrufe SR1, SR2, ... SRN - gemäß FIG 2 die Unterprogrammaufrufe SR1 und SR4 - sind parametrisiert. In einem derartigen Fall ist das zugehörige Unterprogramm unabhängig vom Teileprogramm TP in der numerischen Steuerung 7 hinterlegt. Mittels des zugehörigen Unterprogramms wird der entsprechende Unterprogrammaufruf SR1, SR4 innerhalb der numerischen Steuerung 7 in eine Folge von einzelnen Verfahrbewegungen der lagegeregelten Achsen A1 bis A5 der Produktionsmaschine 11 umgesetzt. Die numerische Steuerung 7 berücksichtigt bei der Umsetzung in die Verfahrbewegungen der lagegeregelten Achsen A1 bis A5 die Parameter a, b, c des entsprechenden Unterprogrammaufrufs SR1, SR4. Diese Teile des Teileprogramms TP können der numerischen Steuerung 7 daher in parametrisierter Form vorgegeben sein.

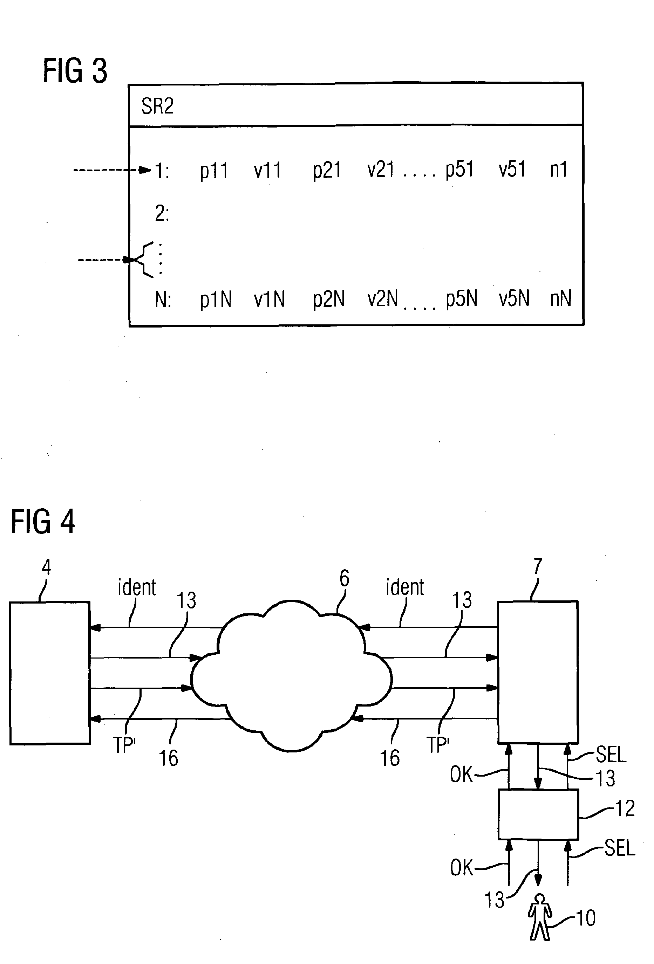

Andere der Unterprogrammaufrufe SR1, SR2, ... SRN - gemäß FIG 2 die Unterprogrammaufrufe SR2 und SR3 - sind nicht parametrisiert. In diesem Fall sind die zugehörigen Unterprogramme Bestandteil des Teileprogramms TP. Sie bestehen gemäß FIG 3 in der Regel aus einer (sehr langen) Abfolge einzelner Verfahrbewegungen der lagegeregelten Achsen A1 bis A5. Für jede einzelne Verfahrbewegung ist für jede lagegeregelte Achse A1 bis A5 ein jeweiliger Positionswert p11 bis p51, p1N bis p5N vorgegeben. Weiterhin ist meist für jede lagegeregelte Achse A1 bis A5 ein jeweiliger Geschwindigkeitswert v11 bis v51, v1N bis v5N vorgegeben. Weiterhin ist meist für mindestens eine drehzahlgeregelte Achse A6 eine Drehzahl n1 bis nN vorgegeben.

Es ist möglich, dass die nicht parametrisierten Unterprogrammaufrufe SR2, SR3 als solche entfallen und stattdessen die Abfolgen der einzelnen Verfahrbewegungen der lagegeregelten Achsen A1 bis A5 und gegebenenfalls auch der drehzahlgeregelten Achse A6 im Hauptprogramm des Teileprogramms TP enthalten sind.

Das Computerprogramm 8, mit dem die numerische Steuerung 7 programmiert ist, bewirkt über die Ausführung des Teileprogramms TP hinaus, dass der Bediener 10 über eine Bedienerschnittstelle 12 mit der numerischen Steuerung 7 kommunizieren kann und die numerische Steuerung 7 hierauf aufbauende Tätigkeiten ausführt. Das entsprechende Betriebsverfahren, das Gegenstand der vorliegenden Erfindung ist, wird nachfolgend in Verbindung mit FIG 4 näher erläutert.

Gemäß FIG 4 kann der Bediener 10 der numerischen Steuerung 7 über die Bedienerschnittstelle 12 einen Auswahlbefehl SEL vorgegeben. Mittels des Auswahlbefehls SEL wird mindestens eine Programmanweisung einer Sequenz von Programmanweisungen des Teileprogramms TP selektiert. Beispielsweise kann der Bediener 10, wie in FIG 2 durch gestrichelte Pfeile angedeutet ist, einen Unterprogrammaufruf SR1, SR4 selektieren, welcher der numerischen Steuerung 7 in parametrisierter Form vorgegeben ist, dessen zugehöriges Unterprogramm also unabhängig vom Teileprogramm TP in der numerischen Steuerung 7 hinterlegt ist. Alternativ kann der Bediener 10, wie in FIG 3 durch gestrichelte Pfeile angedeutet ist, mittels des Auswahlbefehls SEL eine einzelne Programmanweisung einer Sequenz von Programmanweisungen oder eine Gruppe aufeinander folgender Programmanweisungen der Sequenz von Programmanweisungen selektieren. Beispielsweise kann der Bediener 10 im letztgenannten Fall die erste und die letzte Programmanweisung der zu selektierenden Gruppe anwählen. Die zugehörige Sequenz von Programmanweisungen liegt vorzugsweise weder im Teileprogramm TP noch in der numerischen Steuerung 7 in parametrisierter Form vor. Wiederum alternativ kann der Bediener 10, wie in FIG 2 durch einen durchgezogenen Pfeil angedeutet ist, mittels des Auswahlbefehls SEL einen Unterprogrammaufruf SR2 selektieren, der weder in der numerischen Steuerung 7 noch im Teileprogramm TP in parametrisierter Form vorliegt. In diesem Fall wird durch den Auswahlbefehl SEL (indirekt) die gesamte Abfolge von Verfahrbewegungen des entsprechenden Unterprogramms selektiert.

Es ist möglich, dass das nachfolgend weiter erläuterte Betriebsverfahren nur dann ausgeführt wird, wenn der Bediener 10 bestimmte Programmanweisungen selektiert. Beispielsweise ist es möglich, dass das nachfolgend weiter erläuterte Betriebsverfahren nur dann ausgeführt wird, wenn der Bediener 10 Programmanweisungen selektiert, die in der numerischen Steuerung 7 in parametrisierter Form vorliegen. Vorzugsweise wird das nachfolgend weiter erläuterte Betriebsverfahren jedoch stets ausgeführt, also unabhängig davon, welche Programmanweisung oder welche Programmanweisungen der Bediener 10 selektiert. Der Bediener 10 kann also, soweit es das erfindungsgemäße Betriebsverfahren betrifft, vorzugsweise eine beliebige Programmanweisung oder eine beliebige Gruppe aufeinander folgender Programmanweisungen der Sequenz von Programmanweisungen selektieren. Insbesondere können die vom Bediener 10 selektierten Programmanweisungen mindestens eine Programmanweisung umfassen, aufgrund derer das Werkstück 2 auf einer Fläche bearbeitet wird, die an mindestens einem Punkt der Fläche eine in zwei zueinander orthogonalen Richtungen gekrümmt ist. Dies gilt unabhängig davon, wie die beiden zueinander orthogonalen Richtungen gewählt sind. Anders ausgedrückt: Es existiert an dem entsprechenden Punkt der Fläche keine Richtung, in der Fläche nicht gekrümmt ist.

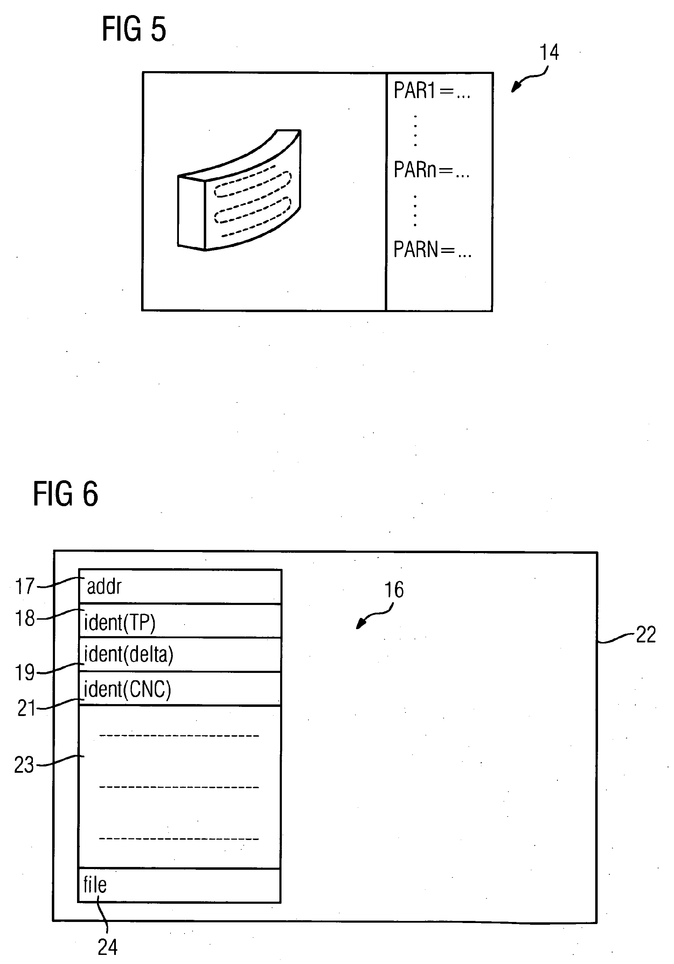

Aufgrund des Auswahlbefehls SEL gibt die numerische Steuerung 7 eine parametrisierte Beschreibung 13 der selektierten Programmanweisung oder der die mindestens eine selektierte Programmanweisung enthaltenden Sequenz von Programmanweisungen über die Bedienerschnittstelle 12 an den Bediener 10 der numerischen Steuerung 7 aus. FIG 5 zeigt rein beispielhaft eine entsprechende Ausgabemaske 14.

Falls das erfindungsgemäße Betriebsverfahren auch dann ausgeführt wird, wenn die parametrisierte Beschreibung 13 in der numerischen Steuerung 7 und im Teileprogramm TP nicht enthalten ist, muss der numerischen Steuerung 7 bekannt sein, mittels welchen CAM-Systems 4 das Teileprogramm TP generiert wurde. Die entsprechende Information kann der numerischen Steuerung 7 beispielsweise vom Bediener 10 vorgegeben werden. Auch kann die entsprechende Information fest in der numerischen Steuerung 7 hinterlegt sein. Vorzugsweise jedoch enthält das Teileprogramm TP gemäß FIG 2 einen Header 15, in dem die entsprechende Information hinterlegt ist. In diesem Fall kann die numerische Steuerung 7 das zugehörige CAM-System 4 anhand des Headers 15 selbsttätig ermitteln. Die Information als solche kann beliebiger Natur sein. Beispielsweise kann sie in Form einer URL (universal resource locator) hinterlegt sein.

Falls der Bediener 10 der numerischen Steuerung eine Programmanweisung selektiert, die im Teileprogramm TP und in der numerischen Steuerung 7 nicht in parametrisierter Form vorliegt, übermittelt die numerische Steuerung 7 gemäß FIG 4 über die Rechner-Rechner-Verbindung 6 direkt oder indirekt eine Information ident an das CAM-System 4, mittels dessen das Teileprogramm TP erstellt wurde. Die Identifikation ident identifiziert die mindestens eine selektierte Programmanweisung. Beispielsweise kann die entsprechende Information ident die Zeilennummer des Hauptprogramms des Teileprogramms TP oder eine Kennzeichnung des entsprechenden Unterprogramms und dort die Zeilennummer umfassen. Die Information ident wird vom CAM-System 4 automatisiert verarbeitet. Insbesondere ermittelt das CAM-System 4 die zugehörige parametrisierte Beschreibung 13 der selektierten Programmanweisung oder der die mindestens eine selektierte Programmanweisung enthaltenden Sequenz von Programmanweisungen. Die parametrisierte Beschreibung 13 übermittelt das CAM-System 4 über die Rechner-Rechner-Verbindung 6 an die numerische Steuerung 7. Die numerische Steuerung 7 nimmt die parametrisierte Beschreibung 13 entgegen und gibt sie an den Bediener 10 aus.

Unabhängig davon, ob die parametrisierte Beschreibung 13 in der numerischen Steuerung 7 oder im Teileprogramm TP vorhanden ist oder ob die parametrisierte Beschreibung 13 der numerischen Steuerung 7 vom CAM-System 4 übermittelt wird, enthält die parametrisierte Beschreibung 13 eine Anzahl von Parametern PAR1 bis PARN. Die Parameter PAR1 bis PARN können vom Bediener 10 geändert werden. Wenn nun der Bediener 10 einen der Parameter PAR1 bis PARN - beispielsweise den Parameter PARn - ändert, wird ein modifiziertes Teileprogramm TP' erstellt.

In dem Fall, dass die parametrisierte Beschreibung 13 der selektierten Programmanweisung(en) in der numerischen Steuerung 7 gespeichert ist, ist die numerische Steuerung 7 selbst in der Lage, das modifizierte Teileprogramm TP' zu ermitteln. Es ist also hierfür a priori keine Kommunikation zwischen der numerischen Steuerung 7 und dem CAM-System 4 erforderlich. Sie ist zwar möglich, aber nicht erforderlich. Falls die parametrisierte Beschreibung 13 hingegen nicht in der numerischen Steuerung 7 gespeichert ist, übermittelt die numerische Steuerung 7 (nach Vorgabe einer entsprechenden Anforderung durch den Bediener 10) den geänderten Parameter PARn (oder alle Parameter PAR1 bis PARN einschließlich des geänderten Parameters PARn) über die Rechner-Rechner-Verbin¬dung 6 an das CAM-System 4. Das CAM-System 4 ermittelt daraufhin das modifizierte Teileprogramm TP'. Das modifizierte Teileprogramm TP' korrespondiert mit der vom Bediener 10 geänderten parametrisierten Beschreibung 13. Das modifizierte Teileprogramm TP' wird - soweit erforderlich - vom CAM-System 4 automatisch an die numerische Steuerung 7 übermittelt. Die numerische Steuerung 7 nimmt das modifizierte Teileprogramm TP' entgegen. Der Bediener 10 ist dadurch in der Lage, nachfolgend anstelle des ursprünglichen Teileprogramms TP das modifizierte Teileprogramm TP' aufzurufen und von der numerischen Steuerung 7 ausführen zu lassen.

Unabhängig davon, ob das modifizierte Teileprogramm TP' mit oder ohne Kommunikation der numerischen Steuerung 7 mit dem CAM-System 4 ermittelt wurde, ist das modifizierte Teileprogramm TP' nun in der numerischen Steuerung 7 verfügbar. Es ist daher möglich, dass der Bediener 10 der numerischen Steuerung 7 - beispielsweise nach einer Probefertigung von einem oder einigen wenigen Werkstücken 2 - das modifizierte Teileprogramm TP' für ordnungsgemäß befindet. In diesem Fall gibt der Bediener 10 der numerischen Steuerung 7 eine Bestätigung OK an die numerische Steuerung 7 aus. Aufgrund der Bestätigung OK speichert die numerische Steuerung 7 das mit der geänderten parametrisierten Beschreibung 13 korrespondierende modifizierte Teileprogramm TP' intern ab. Weiterhin sendet die numerische Steuerung 7 - sofort oder mit zeitlicher Verzögerung - zwangsweise eine Nachricht 16 an eine vorbestimmte Adresse 17. die vorbestimmte Nachricht 16 wird also von der numerischen Steuerung 7 zusammen mit dem Speichern des modifizierten Teileprogramms TP' gesendet.

Die Nachricht 16 enthält gemäß FIG 6 in einem vorbestimmten Format eine eindeutige Identifikation 18 für das ursprüngliche Teileprogramm TP. Die Nachricht 16 enthält weiterhin in einem vorbestimmten Format eine eindeutige Identifikation 19 für die vom Bediener 10 der numerischen Steuerung 7 vorgenommene Änderung. Die Identifikationen 18, 19 können aufgrund des Umstands, dass sie das ursprüngliche Teileprogramm TP und die vorgenommene Änderung eindeutig identifizieren, automatisch ausgewertet werden. Es ist daher prinzipiell möglich, dass das CAM-System 4, mittels dessen das (ursprüngliche) Teileprogramm TP generiert wurde, anhand der Nachricht 16 - insbesondere anhand der Identifikation 18 - selbsttätig und automatisch einen Datensatz 20 ermittelt, der dem ursprünglichen Teileprogramm TP zugrundeliegt. Weiterhin ist das CAM-System 4 anhand der Nachricht 16 in der Lage, den Datensatz 20 entsprechend der vorgenommenen Änderung - beschrieben durch die Identifikation 19 - zu modifizieren. Vorzugsweise enthält die Nachricht 16 weiterhin in automatisiert auswertbarer Form eine Identifikation 21 der numerischen Steuerung 7.

Wie bereits erwähnt, ist es möglich, dass die numerische Steuerung 7 die Nachricht 16 nicht sofort mit dem Speichern des modifizierten Teileprogramms TP' sendet. Das Computerprogramm 8, mit dem die numerische Steuerung 7 programmiert ist, ist jedoch derart ausgestaltet, dass die Nachricht 16 zwangsweise gesendet wird. Beispielsweise kann ab dem Vorgeben der Bestätigung OK ein Ausführen des modifizierten Teileprogramms TP' gesperrt werden, bis die Nachricht 16 gesendet ist.

Wenn die Nachricht 16 zeitversetzt gesendet wird, kann die numerische Steuerung 7 beispielsweise auf einem Bildschirm der Bedienerschnittstelle 12 ein Fenster 22 öffnen, über das der Bediener 10 der numerischen Steuerung 7 Freitext 23 eingeben kann. Alternativ oder zusätzlich ist es möglich, dass der Bediener 10 der numerischen Steuerung 7 der Nachricht 16 eine Datei 24 (oder gegebenenfalls auch mehrere Dateien 24) beigefügt. Der Freitext 23 und die Datei 24 (bzw. die Dateien 24) werden in diesem Fall zusammen mit der Nachricht 16 an die vorbestimmte Adresse 17 gesendet.

Es ist möglich, dass die numerische Steuerung 7 die Nachricht 16 nur dann sendet, wenn der Bediener 10 bestimmte Änderungen des Teileprogramms TP vorgenommen hat. Beispielsweise ist es möglich, dass die numerische Steuerung 7 die Nachricht 16 nur dann sendet, wenn die parametrisierte Beschreibung 13 in der numerischen Steuerung 7 oder im Teileprogramm TP vorhanden ist. Denn in diesem Fall kann unter Umständen die Änderung vom Bediener 10 vorgenommen werden, ohne dass eine Kommunikation mit dem CAM-System 4 erforderlich ist. Wenn hingegen die parametrisierte Beschreibung 13 der numerischen Steuerung 7 vom CAM-System 4 übermittelt wurde, ist auf seiten des CAM-Systems 4 bekannt, dass das Teileprogramm TP geändert wurde und welche Änderung vorgenommen wurde. In diesem Fall kann beispielsweise auf seiten des CAM-Systems 4 direkt eine entsprechende Nachricht generiert werden. Vorzugsweise jedoch sendet die numerische Steuerung 7 die Nachricht 16 unabhängig davon, welche Änderung der Bediener 10 vorgenommen hat, an die vorbestimmte Adresse 17.

Die vorbestimmte Adresse 17 muss der numerischen Steuerung 7 bekannt sein. Sie kann - analog zur Information über das CAM-System 4 - fest in der numerischen Steuerung 7 hinterlegt sein. Vorzugsweise jedoch ist die vorbestimmte Adresse 17 in dem Header 15 hinterlegt. In diesem Fall kann die numerische Steuerung 7 die vorbestimmte Adresse 17 anhand des Headers 15 selbsttätig ermitteln.

Die vorbestimmte Adresse 17 kann als solche eine beliebige Adresse sein. Beispielsweise kann sie in Form einer URL oder einer E-Mail-Adresse hinterlegt sein. Im letztgenannten Fall ist die Nachricht 16 eine E-Mail. Unabhängig von der Art der vorbestimmten Adresse 17 kann die vorbestimmte Adresse 17 beispielsweise für das CAM-System 4 charakteristisch sein, mittels dessen das Teileprogramm TP erstellt wurde. Alternativ kann es sich beispielsweise um eine E-Mail-Adresse eines vorbestimmten Bedieners des CAM-Systems 4 handeln.

Die vorliegende Erfindung weist viele Vorteile auf. Insbesondere ist es für den Bediener des CAM-Systems 4 auf einfache Weise möglich, das von ihm erstellte Teileprogramm TP konsistent mit dem der numerischen Steuerung 7 zugänglichen Teileprogramm TP zu halten, obwohl der Bediener 10 der numerischen Steuerung 7 an seinem Teileprogramm TP Änderungen vorgenommen hat. Beispielsweise kann der Bediener des CAM-Systems 4 eine entsprechende Nachricht 16 automatisch angezeigt bekommen oder (beispielsweise im Falle einer E-Mail) in seinem E-Mail-Postfach aufrufen. Wenn er die Änderung übernehmen möchte, muss er lediglich noch die Änderung autorisieren oder freischalten, was mittels eines einzelnen Bestätigungsbefehls geschehen kann. Die weitere Aktualisierung des im CAM-System 4 hinterlegten Datensatzes 20 und des entsprechenden Teileprogramms TP kann automatisch erfolgen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Betriebsverfahren für eine numerische Steuerung (7),
- wobei die numerische Steuerung (7) Zugriff auf ein Teileprogramm (TP) hat, das von der numerischen Steuerung (7) ausführbar ist,
- wobei von der numerischen Steuerung (7) durch Ausführen des Teileprogramms (TP) eine Produktionsmaschine (11) steuerbar ist,
- wobei der numerischen Steuerung (7) von einem Bediener (10) über eine Bedienerschnittstelle (12) ein Auswahlbefehl (SEL) vorgegeben wird, mittels dessen mindestens eine Programmanweisung des Teileprogramms (TP) selektiert wird,
- wobei die numerische Steuerung (7) eine parametrisierte Beschreibung (13) der mindestens einen selektierten Programmanweisung oder einer die mindestens eine selektierte Programmanweisung enthaltenden Sequenz von Programmanweisungen über die Bedienerschnittstelle (12) an den Bediener (10) der numerischen Steuerung (7) ausgibt,
- wobei die numerische Steuerung (7) vom Bediener (10) eine Änderung der parametrisierten Beschreibung (13) entgegennimmt,
- wobei die numerische Steuerung (7) ein mit der geänderten parametrisierten Beschreibung (13) korrespondierendes modifiziertes Teileprogramm (TP') speichert,
**dadurch gekennzeichnet,**
**dass** die numerische Steuerung (7) zusammen mit dem Speichern des modifizierten Teileprogramms (TP') zwangsweise eine Nachricht (16) an eine vorbestimmte Adresse (17) sendet, welche in automatisiert auswertbarer Form zumindest das ursprüngliche Teileprogramm (TP) und die vorgenommene Änderung identifiziert, so dass das CAM-System (4), mittels dessen das Teileprogramm (TP) generiert wurde, in der Lage ist, anhand der Nachricht (16) selbsttätig und automatisch einen dem ursprünglichen Teileprogramm (TP) zugrundeliegenden Datensatz (20) zu ermitteln und den Datensatz (20) entsprechend der vorgenommenen Änderung zu modifizieren.

2. Betriebsverfahren nach Anspruch 1,
**dadurch gekennzeichnet, dass** die numerische Steuerung (7) die Nachricht (16) unabhängig davon, welche Änderung der Bediener (10) vorgenommen hat, an die vorbestimmte Adresse (17) sendet.

3. Betriebsverfahren nach Anspruch 1 oder 2,
**dadurch gekennzeichnet, dass** die vorbestimmte Adresse (17) für das CAM-System (4) charakteristisch ist, mittels dessen das Teileprogramm (TP) erstellt wurde.

4. Betriebsverfahren nach Anspruch 1, 2 oder 3,
**dadurch gekennzeichnet, dass** die Nachricht (16) in automatisiert auswertbarer Form eine Identifikation (21) der numerischen Steuerung (7) enthält.

5. Betriebsverfahren nach einem der obigen Ansprüche,
**dadurch gekennzeichnet, dass** die numerische Steuerung (7) vor dem Senden der Nachricht (16) dem Bediener (10) der numerischen Steuerung (7) die Möglichkeit gibt, der Nachricht (16) Freitext (23) und/ oder Dateien (24) beizufügen.

6. Betriebsverfahren nach einem der obigen Ansprüche,
**dadurch gekennzeichnet, dass** die Nachricht (16) eine E-Mail ist.

7. Betriebsverfahren nach einem der obigen Ansprüche,
**dadurch gekennzeichnet, dass** die numerische Steuerung (7) die vorbestimmte Adresse (17) selbsttätig anhand eines Headers (15) des Teileprogramms (TP) ermittelt.

8. Computerprogramm, wobei das Computerprogramm Maschinencode (9) umfasst, der von einer numerischen Steuerung (7) unmittelbar ausführbar ist, wobei die Ausführung des Maschinencodes (9) durch die numerische Steuerung (7) bewirkt, dass die numerische Steuerung (7) ein Betriebsverfahren nach einem der obigen Ansprüche ausführt.

9. Numerische Steuerung, in der ein von der numerischen Steuerung ausführbares Computerprogramm (8) nach Anspruch 8 gespeichert ist.

## Claims

1. Operating method for a numerical controller (7),
- wherein the numerical controller (7) has access to a part program (TP) which can be executed by the numerical controller (7),
- wherein a production machine (11) can be controlled by the numerical controller (7) by execution of the part program (TP),
- wherein a selection command (SEL) is pre-specified to the numerical controller (7) by an operator (10) via an operator interface (12), by means of which selection command (SEL) at least one program statement of the part program (TP) is selected,
- wherein the numerical controller (7) outputs to the operator (10) of the numerical controller (7) a parameterised description (13) of the at least one selected program statement or of a sequence of program statements containing the at least one selected program statement via the operator interface (12),
- wherein the numerical controller (7) accepts a change in the parameterised description (13) from the operator (10),
- wherein the numerical controller (7) stores a modified part program (TP') corresponding to the changed parameterised description (13),
**characterised in that**
the numerical controller (7), along with saving the modified part program (TP'), compulsorily sends a message (16) to a predetermined address (17) which in automatically evaluable form identifies at least the original part program (TP) and the change made, so that the CAM system (4) by means of which the part program (TP) was generated is able, based on the message (16), to autonomously and automatically determine a data set (20) underlying the original part program (TP) and to modify the data set (20) in accordance with the change made.

2. Operating method according to claim 1,
**characterised in that** the numerical controller (7) sends the message (16) to the predetermined address (17) regardless of what change the operator (10) has made.

3. Operating method according to claim 1 or 2,
**characterised in that** the predetermined address (17) is characteristic of the CAM system (4) by means of which the part program (TP) was created.

4. Operating method according to claim 1, 2 or 3,
**characterised in that** the message (16) contains, in automatically evaluable form, an identification (21) of the numerical controller (7).

5. Operating method according to one of the above claims,
**characterised in that** the numerical controller (7), before sending the message (16) to the operator (10) of the numerical controller (7), provides the opportunity for free text (23) and/or files (24) to be attached to the message (16).

6. Operating method according to one of the above claims,
**characterised in that** the message (16) is an e-mail.

7. Operating method according to one of the above claims,
**characterised in that** the numerical controller (7) autonomously determines the predetermined address (17) based on a header (15) of the part program (TP).

8. Computer program, wherein the computer program contains machine code (9) which can be executed directly by a numerical controller (7), wherein the execution of the machine code (9) by the numerical controller (7) causes the numerical controller (7) to execute an operating method according to one of the above claims.

9. Numerical controller, in which is stored a computer program (8) according to claim 8 which can be executed by the numerical controller.

## Revendications

1. Procédé pour faire fonctionner une commande (7) numérique,
- dans lequel la commande (7) numérique a accès à un programme pièces (TP) qui peut être exécuté par la commande (7) numérique,
- dans lequel une machine (11) de production peut être commandée par la commande numérique en effectuant le programme pièces (TP),
- dans lequel il peut être prescrit, par l'intermédiaire d'une interface (12) utilisateur, à la commande (7) numérique par un utilisateur (10) un ordre (SEL) de sélection, au moyen duquel au moins une instruction du programme pièces (TP) est sélectionnée,
- dans lequel la commande (7) numérique émet, vers l'utilisateur (10) de la commande (7) numérique par l'intermédiaire de l'interface utilisateur (12), une description (13) paramétrée de la au moins une instruction de programme sélectionnée ou d'une séquence d'instructions de programme contenant la au moins une instruction de programme sélectionnée,
- dans lequel la commande (7) numérique reçoit de l'utilisateur (10) une modification de la description paramétrée,
- dans lequel la commande (7) numérique mémorise un programme pièces (TP') modifié correspondant à la description (13) paramétrée modifiée,
**caractérisé**
**en ce que** la commande (7) numérique envoie à une adresse (17) définie à l'avance, ensemble avec la mémorisation du programme pièces (TP') modifié un message (16) qui identifie, sous une forme pouvant être exploitée de manière automatisée, au moins le programme pièces (TP) d'origine et la modification effectuée de sorte que le système CAM (4), au moyen duquel le programme pièces (TP) a été produit, est en mesure à l'aide du message (16) de déterminer indépendamment et automatiquement un jeu (20) de données à la base du programme pièces (TP) d'origine et de modifier le jeu (20) de donnée conformément à la modification effectuée.

2. Procédé suivant la revendication 1,
**caractérisé en ce que** la commande (7) numérique envoie le message (16) à l'adresse (17) définie à l'avance indépendamment de la modification que l'utilisateur (10) a effectuée.

3. Procédé suivant la revendication 1 ou 2,
**caractérisé en ce que** l'adresse (17) définie à l'avance est caractéristique du système CAM (4) au moyen duquel le programme pièces (TP) a été établi.

4. Procédé suivant la revendication 1, 2 ou 3,
**caractérisé en ce que** le message (7) contient sous une forme exploitable de manière automatisée une identification (21) de la commande (7) numérique.

5. Procédé suivant l'une des revendications précédentes,
**caractérisé en ce que** la commande (7) numérique donne à l'utilisateur (10) de la commande (7) numérique avant l'envoi du message (16) la possibilité d'ajouter au message (16) un texte (23) libre et/ou des fichiers (24).

6. Procédé suivant l'une des revendications précédentes,
**caractérisé en ce que** le message (16) est un courriel.

7. Procédé suivant l'une des revendications précédentes,
**caractérisé en ce que** la commande (7) numérique détermine l'adresse (17) définie à l'avance indépendamment, au moyen d'une entête (15) du programme pièces (TP).

8. Programme d'ordinateur, le programme d'ordinateur comprenant un code machine (9) qui peut être exécuté directement par une commande (7) numérique, l'exécution du code machine (9) par la commande (7) numérique faisant que la commande (7) numérique effectue un procédé suivant l'une des revendications précédentes.

9. Commande numérique, dans laquelle est mémorisé un programme (8) d'ordinateur suivant la revendication 8 pouvant être exécuté par la commande numérique.
